(19) Europäisches Patentamt
European Patent Office
Office européen des brevets

(11) Veröffentlichungsnummer : **0 344 407 B1**

(12) **EUROPÄISCHE PATENTSCHRIFT**

(45) Veröffentlichungstag der Patentschrift :
27.11.91 Patentblatt 91/48

(51) Int. Cl.⁵ : **B23H 11/00, B23Q 7/14**

(21) Anmeldenummer : **89103168.4**

(22) Anmeldetag : **23.02.89**

(54) Spannvorrichtung.

(30) Priorität : **28.05.88 DE 3818261**

(43) Veröffentlichungstag der Anmeldung :
**06.12.89 Patentblatt 89/49**

(45) Bekanntmachung des Hinweises auf die
Patenterteilung :
**27.11.91 Patentblatt 91/48**

(84) Benannte Vertragsstaaten :
**CH DE ES FR IT LI**

(56) Entgegenhaltungen :
**DD-A- 217 462**
**DE-A- 3 043 366**
**DE-A- 3 341 055**
**US-A- 4 390 172**

(73) Patentinhaber : **AEG-Elotherm GmbH**
**Hammesberger Strasse 31**
**W-5630 Remscheid-Hasten (DE)**

(72) Erfinder : **Stengel, Edgar**
**Erdelenstrasse 35**
**W-5630 Remscheid (DE)**

(74) Vertreter : **Cohausz & Florack Patentanwälte**
**Postfach 14 01 61 Schumannstrasse 97**
**W-4000 Düsseldorf 1 (DE)**

## Beschreibung

Die Erfindung betrifft eine Spannvorrichtung, bestehend aus einer Palette mit Mitteln zum lösbaren Befestigen von Werkstücken und einer selbstjustierenden Lagerung sowie Arretierung in der Werkzeugmaschine, insbesondere einer Funkenerosionsmaschine siehe US-A-4390172.

Selbstjustierende Dreipunktlagerungen für Paletten sind in einer Vielzahl verschiedener Ausführungen bekannt. So zeigt die DE-OS 3341055 ein Lagersystem für ein optisches Element in einem analytischen Instrument mit drei Bolzenlagern, von denen ein Lager eine Justierung der Höhenlage erlaubt. Die Konstruktion ist jedoch verhältnismäßig aufwendig und bietet keine einwandfreie Zentriermöglichkeit für die Palette innerhalb eines räumlichen Koordinatensystems. Eine weitere Dreipunktlagerung einer Palette ist aus der US-PS 4390172 bekannt. Wie schon bei der vorerwähnten Dreipunktlagerung ist auch hier jedes Lager individuell gestaltet, was die Fertigung erschwert und verteuert. Außerdem sind die Freiheitsgrade jedes der drei Lager unterschiedlich und nur eines fixiert die Palette in allen drei räumlichen Koordinatenrichtungen.

Der Erfindung liegt die Aufgabe zugrunde, eine konstruktiv möglichst einfache und nach dem Baukastenprinzip preiswerte Lösung für eine Dreipunktlagerung anzubieten, die mit einer Mindestanzahl unterschiedlicher Bauelemente auskommt, einfach zu montieren und justieren ist und die, was insbesondere bei Funkenerosionsmaschinen wichtig ist, von bei der Bearbeitung anfallendem Feinststaub freigehalten werden kann.

Zur Lösung dieser Aufgabe wird erfindungsgemäß eine Spannvorrichtung der eingangs genannten Art vorgeschlagen, die gekennzeichnet ist durch eine Dreipunktlagerung über drei Bolzen, von denen zwei Bolzen mit achsparallel, insbesondere fluchtenden Achsen, und ein Bolzen mit zu den Achsen der beiden anderen Bolzen senkrechter Achse auf dem Aufspanntisch der Werkzeugmaschine befestigt sind und daß an der Unterseite der Palette drei Lagerprismen in einer der Lage der Bolzen entsprechenden Anordnung vorgesehen sind.

Die erfindungsgemäße Spannvorrichtung löst die gestellte Aufgabe, denn es werden konstruktiv einfache Elemente, wie die Bolzen, gefertigt aus Rundstäben, und die prismatischen Aufnahmen, verwendet, wobei sich eine besonders preisgünstige Fertigung dann erreichen läßt, wenn man gemäß einer vorteilhaften Ausgestaltung der erfindungsgemäßen Spannvorrichtung alle Bolzen und Lagerprismen identisch ausbildet. Das Ausrichten wird erleichtert, wenn die Achsen der Bolzen in derselben Ebene liegen. Darüber hinaus ist die erfindungsgemäße Spannvorrichtung selbstjustierend und sucht sich einwandfrei die vorgeschriebene Lage. Schließlich läßt sich die erfindunsgemäße Spannvorrichtung leicht von anfallendem Feinststaub freihalten, was erleichtert wird, wenn die Bolzen gemäß einer bevorzugten Ausgestaltung der erfindungsgemäßen Spannvorrichtung mit Spülbohrungen versehen sind. Mittels der die Spülbohrungen durchströmenden und auf der Bolzenoberfläche austretenden Spülflüssigkeit wird die Oberfläche der Bolzen, die bevorzugt in je einem auf dem Aufspanntisch der Werkzeugmaschine ausgerichtet befestigten Lagerprisma eingesetzt sind, von bei der Werkstückbearbeitung in der Werkzeugmaschine anfallendem Feinststaub freigehalten. Dadurch wird eine einwandfreie Auflagerung der Palette über die an ihrer Unterseite befestigten Lagerprismen auf den Lagerbolzen gewährleistet.

Bei identischer Ausbildung der Lager, wie sie erfindungsgemäß bevorzugt wird, ergibt sich ein weiterer Vorteil dadurch, daß die Federrate c = P/f (N/mm) (auch "Federhärte" oder "Federsteife" genannt) mit P — Federkraft in $N/mm^2$ unf f — Federweg in mm bei elastischer Einfederung bei gleicher Belastung der Lager gleich groß und hoch ist, weil in allen drei gleichen Lagern Linienberührung (kurzer Federweg) vorliegt.

Durch Befestigen der Lagerprismen und Bolzen mittels Schrauben am Aufspanntisch der Werkzeugmaschine bzw. an der Palette lassen sich die Elemente der erfindungsgemäßen Spannvorrichtung leicht montieren und auch ausrichten.

In der Zeichnung ist ein Ausführungsbeispiel der erfindungsgemäßen Spannvorrichtung dargestellt. Es zeigen :

Figur 1    eine Draufsicht,
Figur 2    eine Frontansicht,
Figur 3    eine Seitenansicht und
Figur 4    eines der Lager im Längsschnitt in größerem Maßstab.

Gleiche Teile sind in den verschiedenen Figuren mit denselben Bezugszeichen versehen.

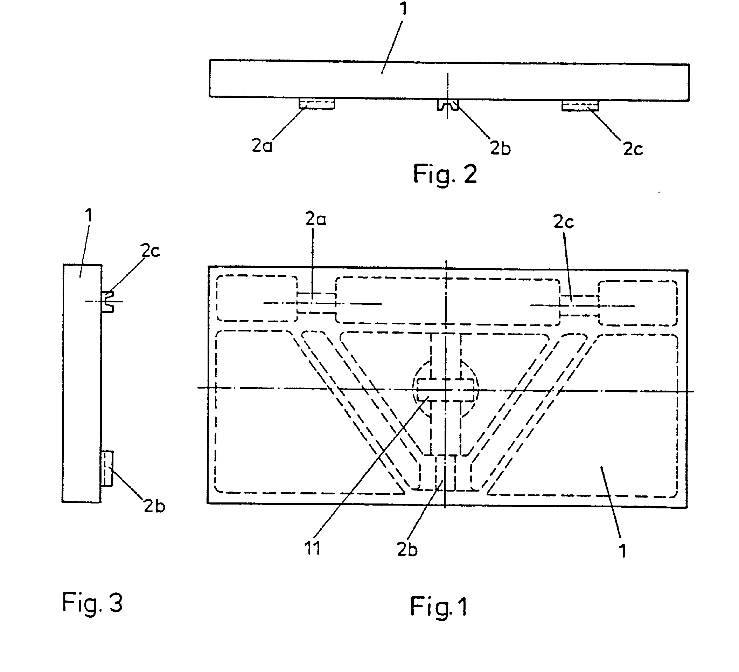

An der Unterseite einer plattenförmigen Palette 1, welche an der Oberseite nicht dargestellte Mittel zum Aufspannen eines in der Werkzeugmaschine zu bearbeitenden Werkstücks besitzt, sind drei Lagerprismen 2a, 2b und 2c derart angeordnet, daß sie die Spitzen eines gemeinsamen Dreiecks bilden (Figur 1). Dabei sind zwei der Lagerprismen 2a, 2c fluchtend ausgerichtet und das dritte Lagerprisma 2b steht senkrecht zu den beiden anderen 2a, 2c. Die Lagerprismen 2a, 2b, 2c liegen alle in derselben Ebene.

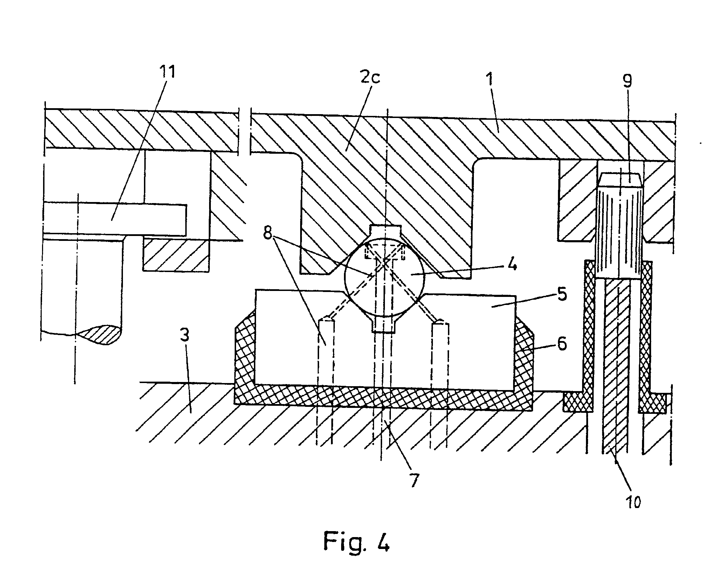

Die Ausbildung der Lager und die Befestigung der Palette 1 am Aufspanntisch 3 der Werkzeugmaschine geht am besten aus Figur 4 hervor. Die Palette 1 ruht mit den an ihr einstückigen oder an ihr befestigten Lagerprismen 2 auf Bolzen 4, die, eventuell über ein Lagerprisma 5 mit umgebender Isolierung 6, mittels Schrauben 7 am Aufspanntisch 3 der Werkzeugmaschine lösbar befestigt sind. Zwischen jedem Lagerprisma 2 und dem einliegenden Bolzen 4 besteht nur eine linienförmige Berührung, so daß eine sehr genaue Ausrichtung der Palette 1 möglich ist, weil auf dem Bolzen 4 von der Bearbeitung anhaftende Verschmutzung entweder weggedrückt wird oder durch eine Spülflüssigkeit weggespült wird, die durch Spülbohrungen 8 durch das Lagerprisma 5 und den Bolzen 4 zu dessen Oberfläche geleitet wird.

Über den Kontaktstecker 9 und das daran befindliche Kupferseil 10 kann die Palette 1 elektrisch gepolt werden. Am Aufspanntisch 3 der Werkzeugmaschine wird die Palette 1 nach dem Selbstjustieren über Spannmittel, z.B. einen Hydraulikschwenkzylinder 11, festgespannt.

## Bezugszeichenliste

1 Palette
2a Lagerprisma
2c Lagerprisma
3 Aufspanntisch
4 Bolzen
5 Lagerprisma
6 Isolierung
7 Schraube
8 Spülbohrung
9 Stecker
10 Cu-Seil
11 Hydraulikschwenkzylinder

## Patentansprüche

1. Spannvorrichtung, bestehend aus einer Palette mit Mitteln zum lösbaren Befestigen von Werkstücken und einer selbstjustierenden Lagerung sowie Arretierung in der Werkzeugmaschine, insbesondere einer Funkenerosionsmaschine, **gekennzeichnet durch** eine Dreipunktlagerung über drei Bolzen, von denen zwei mit achsparallelen, insbesondere fluchtenden Achsen und ein Bolzen mit zu den Achsen der beiden anderen Bolzen senkrechter Achse auf dem Aufspanntisch (3) der Werkzeugmaschine befestigt sind und daß an der Unterseite der Palette (1) drei Lagerprismen (2) in einer der Lage der Bolzen (4) entsprechenden Anordnung vorgesehen sind.

2. Spannvorrichtung nach Anspruch 1, **dadurch gekennzeichnet,** daß die Bolzen (4) in je einer auf dem Aufspanntisch (3) der Werkzeugmaschine ausgerichtet befestigten Lagerprismen eingesetzt sind.

3. Spannvorrichtung nach einem der Ansprüche 1 oder 2, **dadurch gekennzeichnet,** daß die Bolzen (4) und die Lagerprismen (2) identisch ausgebildet sind und die Achsen der Bolzen (4) in derselben Ebene liegen.

4. Spannvorrichtung nach einem der Ansprüche 1 bis 3, **dadurch gekennzeichnet,** daß die Bolzen (4) Spülbohrungen (8) enthalten.

## Claims

1. A clamping device, comprising a pallet having means for the releasable attachment of workpieces and a self-adjusting bearing and a locking system in the machine tool, more particularly a spark erosion machine, characterized by a three-point bearing via three pins, two of which are attached to the working table (3) of the machine tool with axis-parallel, more particularly aligned axes, one pin being attached thereto with an axis perpendicular to the axes of the other two pins, three bearing prisms (2) being provided on the underside of the pallet (1) in an arrangement corresponding to the position of the pins (4).

2. A clamping device according to claim 1, characterized in that each of the pins (4) is inserted in a bearing prism attached aligned to the working table (3) of the machine tool.

3. A clamping device according to one of claims 1 or 2, characterized in that the pins (4) and the bearing prisms (2) are of identical construction and the axes of the pins (4) lie in the same plane.

4. A clamping device according to one of claims 1 to 3, characterized in that the pins (4) contain flushing bores (8).

## Revendications

1. Dispositif de fixation constitué d'une palette avec des moyens pour la fixation démontable de pièces d'oeuvre et un palier auto-ajustant ainsi qu'un arrêt dans la machine-outil, en particulier une machine d'électroérosion, caractérisé par un palier à trois points par trois boulons, parmi lesquels deux bouchons à axes parallèles, en particulier alignés, et un boulon à axe orthogonal aux axes des deux autres boulons, sont fixés sur la table de fixation (3) de la machine-outil, et en ce que trois prismes de palier (2) sont prévus sur la face inférieure de la palette (1) selon une disposition correspondant à la position des boulons (4).

2. Dispositif de fixation selon la revendication 1, caractérisé en ce que les boulons (4) sont montés chacun dans un des prismes de palier fixés alignés sur la table de fixation (3) de la machine-outil.

3. Dispositif de fixation selon l'une des revendications 1 ou 2, caractérisé en ce que les boulons (4) et les prismes de palier (2) sont réalisés identiques et les axes des boulons (4) se trouvent dans le même plan.

4. Dispositif de fixation selon l'une des revendications 1 à 3, caractérisé en ce que les boulons (4) contiennent des alésages de lavage (8).

Fig. 2

Fig. 3

Fig. 1

Fig. 4